(19) Europäisches Patentamt / European Patent Office / Office européen des brevets

(11) **EP 4 683 325 A1**

(12) **EUROPEAN PATENT APPLICATION**

(43) Date of publication:
**21.01.2026 Bulletin 2026/04**

(21) Application number: **24189827.9**

(22) Date of filing: **19.07.2024**

(51) International Patent Classification (IPC):
**H04N 19/423** (2014.01)    **H04N 19/18** (2014.01)
**H04N 19/184** (2014.01)    **H04N 19/436** (2014.01)

(52) Cooperative Patent Classification (CPC):
**H04N 19/423; H04N 19/18; H04N 19/184;
H04N 19/436**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **intoPIX s.a.**
**1435 Mont-Saint-Guibert (BE)**

(72) Inventors:
• **MAROT, Célestin, Philippe, Lucien, Jacques**
  **5380 Cortil-Wodon (BE)**
• **DAMMAN GEEROMS, Corentin, Aurélien, Sébastien**
  **1950 Kraainem (BE)**
• **BUYSSCHAERT, Charles, Daniel, Nicole, André, Sylvestre**
  **1170 Bruxelles (BE)**

(74) Representative: **Gevers Patents**
**De Kleetlaan 7A**
**1831 Diegem (BE)**

(54) **METHOD AND APPARATUS FOR ENCODING AND DECODING OF DIGITAL DATA**

(57) The present invention relates to a method for encoding an input data set comprising a sequence of coefficients (10-43) into a packed data set (P1-P4), said method for encoding comprising a step of grouping the coefficients into groups (G1-G4) of coefficients, a step of accumulating a number of bits (100-434) of said groups into a set of buffers (B1-B4, B5-B8) so as to form an array of bits in each buffer, and a step of interleaving said arrays. The present invention also relates to an apparatus and a computer program for encoding an input data set comprising a sequence of coefficients into a packed data set, and to a method, apparatus, and computer program for decoding a packed data set obtainable by the method for encoding into an output data set.

FIG. 1

EP 4 683 325 A1

# EP 4 683 325 A1

## Description

### Field of the invention

The present invention relates to a method, apparatus, and computer program for encoding an input data set comprising a sequence of coefficients into a packed data set. The present invention also relates to a method, apparatus, and computer program for decoding a packed data set obtainable by the method for encoding into an output data set.

### Background of the invention

The JPEG XS standard, formally known as ISO/IEC 21122, is an interoperable, visually lossless, low-latency, and lightweight image and video coding system. JPEG XS Part 1, formally known in its second edition as ISO/IEC 21122-1:2022, normatively defines how a compressed JPEG XS codestream can be transformed into a decoded image in a bit exact manner, a "codestream" being defined in the JPEG XS standard as a compressed image data representation that includes all necessary data to allow a (full or approximate) reconstruction of the sample values of a digital image. Moreover, JPEG XS Part 1 provides some key algorithms enabling an encoder to generate a JPEG XS codestream.

The following definitions and notations are used herein. A "coefficient" is an integer number, coded in binary representation, and having a magnitude and an optional sign value. Parameter Ns designates the number of bits coding the value of a coefficient, which is also herein referred to as the "size" of a coefficient. A coefficient may correspond to an image data, such as for example the value of a pixel of an image, or the value of a color component of a pixel of an image. Coefficients may be grouped into a "group of coefficients", which is also referred to as a "code group" in the JPEG XS standard. Parameter $N_g$ designates the number of coefficients in a group, which is also herein referred to as the "size" of a group. In a group of $N_g$ coefficients, a "bitplane" is an array of $N_g$ bits of the coefficients of the group all having the same significance. The significance, or weight, of a bit relates to the position of the bit within a binary number, the "most significant bit", or "MSB", having the highest weight, i.e. the highest position within a binary number, and the "least significant bit", or "LSB" having the lowest weight, i.e. the lowest position within a binary number. Coefficients may be comprised in a sequence of coefficients, i.e. an ordered set of coefficients.

Table C.8 ("Syntax of the data subpacket") in subclause C.5.4 ("Data subpacket") of ISO/IEC 21122-1 :2022 specifies the syntax of the data subpacket in a codestream compliant with the JPEG XS standard. In summary, the JPEG XS standard specifies that coefficients in a sequence of groups of coefficients must be packed into a data subpacket such as to meet the following requirements:

1) the order of the coefficients within a group is preserved in bitplanes packed into the data subpacket, i.e. a bitplane of a group of four coefficients ABCD will begin with a bit from coefficient A, followed by a bit from coefficient B, followed by a bit from coefficient C, and finish with a bit from coefficient D;
2) the order of bitplanes is preserved in the data subpacket, i.e. bitplanes of a group of coefficients are packed in the data subpacket by decreasing significance, starting with the most significant bitplane to be packed until the least significant bitplane to be packed;
3) the order of the groups of coefficients in the sequence of groups is preserved in the data subpacket, i.e. if a group X of coefficients precedes a group Y of coefficients in the sequence of groups, then the bits of coefficients of group X will be packed before the bits of coefficients of group Y in the data subpacket.

Here is an example illustrating how a sequence of coefficients is packed into a data subpacket according to the JPEG XS standard. Let us first introduce a few more definitions and notations. First, a "packed data set" as used herein is a data set comprising a sequence of packed coefficients. A data subpacket according to the JPEG XS standard is a packed data set. In addition, a "bitplane count" as used herein is the number of bits, preferably the number of consecutive bits, of each coefficient in a group of coefficients to be packed into a packed data set or extracted from a packed data set. Herein, consecutive bits are bits of consecutive significance. An equivalent definition of a bitplane count is the following: a bitplane count for a group of coefficients is the number of bitplanes of said group, preferably bitplanes of consecutive significance, to be packed into a packed data set or extracted from a packed data set. Finally, parameter $N_{CG}$ as used herein designates the number of groups of coefficients in a sequence of coefficients. Let us then consider a sequence V of 8 coefficients such that V = {a, b, c, d, e, f, g, h}, each coefficient being coded in Ns = 16 bits, the coefficients being grouped into groups of $N_g$ = 4 consecutive coefficients, so as to form $N_{CG}$ = 2 groups of coefficients, i.e. {a, b, c, d} and {e, f, g, h}. Let us further consider a sequence L of bitplane counts such that L = {3, 1}, the sequence L comprising a bitplane count for each one of the $N_{CG}$ = 2 groups of coefficients. Let us finally denote each bit of a coefficient with an index representing its significance, a higher index denoting a higher significance, such that the bits of a coefficient "a" are denoted as "$a_{15} a_{14} a_{13} a_{12} a_{11} a_{10} as a_8 a_7 a_6 a_5 a_4 as a_2 a_1 a_0$". In such a case, the coefficients are packed into a packed data set P in the following way according to the JPEG XS standard:

2

$$P = a_2\, b_2\, c_2\, d_2\, a_1\, b_1\, c_1\, d_1\, a_0\, b_0\, c_0\, d_0\, e_0\, f_0\, g_0\, h_0,$$

which meets the requirements 1) to 3) set forth hereinabove.

JPEG XS Part 5, formally known in its second edition as ISO/IEC 21122-5:2022, provides the JPEG XS reference software, which is a reference software implementation of an encoder and a decoder compliant with the JPEG XS standard. In said reference implementation, the algorithm for the encoding and decoding of a data subpacket essentially iterates over each bit of each coefficient sequentially. Efficiency of this algorithm could be improved because it does not allow a conventional personal computer to encode nor decode a JPEG XS codestream in real time for a common video stream, such as for instance a video stream with a frame rate of 30 frames per second and with a resolution of 1920x1080 pixels.

Therefore, there is a need for a method, apparatus, and computer program for encoding an input data set comprising a sequence of coefficients into a packed data set or for decoding a packed data set obtainable by the method for encoding into an output data set in a more efficient manner than the one disclosed in the JPEG XS standard, which proposes to iterate over each bit of each coefficient sequentially.

**Summary of the invention**

To this end, the present invention proposes a method, apparatus, and computer program for encoding an input data set comprising a sequence of coefficients into a packed data set in a more efficient manner than the one disclosed in the JPEG XS standard. The present invention further proposes a method, apparatus, and computer program for decoding a packed data set obtainable by the method for encoding of the invention into an output data set in a more efficient manner than the one disclosed in the JPEG XS standard.

According to a first aspect of the invention, there is provided a method for encoding an input data set V comprising a sequence of M coefficients of Ns bits into a packed data set P, said method for encoding comprising the steps of:

 a) grouping the M coefficients into $N_{CG}$ groups of $N_g$ coefficients, $N_g$ being greater than or equal to two;
 b) providing a sequence L of bitplane counts, the sequence L comprising a bitplane count for each one of said groups of coefficients;
 c) providing a set of $N_g$ buffers of at least K bits each, wherein each buffer uniquely corresponds to a position of a coefficient in a group of $N_g$ coefficients;
 d) for each coefficient in a group of $N_g$ coefficients:

  i. extracting a number of bits, preferably a number of consecutive bits, of said coefficient equal to the bitplane count corresponding to said group;
  ii. accumulating said number of bits into the buffer corresponding to the position of said coefficient in said group;

 e) repeating step d) with a new group of $N_g$ coefficients until at least K bits have been accumulated in each buffer, thereby forming an array of bits in each buffer;
 f) interleaving said arrays for producing an intermediate data set;
 g) adding said intermediate data set to the packed data set P;
 h) repeating steps d) to g) until all coefficients of the input data set have been processed.

The method for encoding of the invention allows an input data set comprising a sequence of coefficients to be encoded into a packed data set in a more efficient manner than the one disclosed in the JPEG XS standard.

Indeed, the method for encoding of the invention does not iterate over each bit of each coefficient sequentially. Instead, said method proposes to accumulate bits from coefficients into a set of buffers, thereby forming an array of bits in each buffer, and then to interleave said arrays for producing the packed data set. The interleaving step is typically performed after several accumulation steps, therefore processing bits from several coefficients in a single interleaving step, thereby allowing a more efficient packing of the coefficients than the one disclosed in the JPEG XS standard, i.e. with a reduced number of operations. In fact, in a typical implementation of the method for encoding of the invention, the time spent interleaving coefficients is 4 to 10 times less than the time spent accumulating coefficients.

In the method for encoding of the invention, parameters M, Ns, $N_{CG}$, $N_g$, and K are positive integers. Besides, in said method, a bitplane count value may take any value comprised between 0 and Ns, including these values, the parameter Ns being the number of bits coding the value of a coefficient. Advantageously, said method works in the same way for any such value of a bitplane count.

If M is not an integer multiple of $N_g$, then the last group may be partially filled, i.e. comprise less than $N_g$ coefficients. The method for encoding of the invention remains applicable in such a case. Besides, the parameter $N_{CG}$ may be generally computed as follows: $N_{CG} = \lceil M/N_g \rceil$, which remains valid even if M is not an integer multiple of $N_g$. The notation "$\lceil x \rceil$" denotes the ceiling function, also noted "ceil(x)", which is a mathematical function that returns the smallest integer which is not smaller than x, where x may be a decimal value.

The fact that each buffer in the set of buffers provided in the step c) of the method for encoding uniquely corresponds to a position of a coefficient in a group of coefficients is to be interpreted as follows. The number of buffers in said set is equal to the number of coefficients in a group of coefficients, each coefficient having a given position in said group. The unique correspondence between said buffers and said positions means that each buffer corresponds to a position and, reciprocally, that each position corresponds to a buffer.

After an execution of a step d) of the method for encoding of the invention, all buffers provided in the step c) of said method comprise the same number of bits. Indeed, said step d) is executed for each coefficient in a group of coefficients, and the number of bits to be extracted is the same for each coefficient in a group, as determined by a bitplane count of the sequence of bitplane counts.

In the step e) of the method for encoding of the invention, if each buffer already comprises at least K bits, then a new step d) is not executed and the next step is the step f). The number K of bits may be interpreted as a filling threshold, above which a buffer is considered full. The size of a buffer, i.e. the number of bits in a buffer, may be larger than said number K of bits. In addition, the size of an array of bits recited in the step e), i.e. the number of bits in said array, may also be larger than said number K of bits, for instance in a case where the number of bits accumulated in a buffer in a step d) exceeds said number K of bits.

Preferably, the steps of the method for encoding of the invention are executed in the indicated order, i.e. the alphabetical order.

Preferably, the grouping of the coefficients performed in the step a) of the method for encoding of the invention groups consecutive coefficients in the sequence of coefficients of the input data set, in which case said step a) may be expressed as follows: "grouping the M coefficients into $N_{CG}$ groups of $N_g$ consecutive coefficients in said sequence of coefficients, $N_g$ being greater than or equal to two".

Preferably, the order of the bitplane counts in the sequence of bitplane counts provided in the step b) of the method for encoding of the invention corresponds to the order of the groups of coefficients provided in the step a) of said method.

Preferably, buffers provided in the step c) of the method for encoding of the invention are adjacent in memory, so as to form a single array or vector of bits, which may facilitate a parallel or vectorized implementation of some of the steps of said method.

Preferably, said buffers are implemented as registers of a processor. Herein, a processor generally designates a device able to execute computer instructions, such as for example a (micro)processor for a computer, which is also known as a central processing unit (CPU), or a graphics processing unit (GPU). A register of a processor, also referred to herein as a "processor register", is a high-speed memory built into a processor for quick data access. Each one of said buffers may be formed by all or part of one or more processor registers.

Preferably, steps i. and ii. in the step d) of the method for encoding of the invention may be performed in a single operation, in which case said step d) may be expressed as follows: "for each coefficient in a group of $N_g$ coefficients, accumulating a number of bits, preferably a number of consecutive bits, of said coefficient equal to the bitplane count corresponding to said group into the buffer corresponding to the position of said coefficient in said group".

Preferably, the interleaving of the $N_g$ arrays of bits performed in the step f) of the method for encoding of the invention is computed as a $N_g$-dimensional Morton code, which is also known as a "bit-wise interleaving", i.e. by taking one bit from each array successively so as to form a sequence of interleaved bits. For example, bits from the four arrays "$a_2\,a_1\,a_0$", "$b_2\,b_1\,b_0$", "$c_2\,c_1\,c_0$", and "$d_2\,d_1\,d_0$" are bit-wise interleaved in the following way: $a_2\,b_2\,c_2\,d_2\,a_1\,b_1\,c_1\,d_1\,a_0\,b_0\,c_0\,d_0$. Besides, such an interleaving may be performed efficiently in parallel, by leveraging the parallel processing abilities of modern computer processors, and more particularly the vectorized instructions available in such processors, such instructions allowing multiple elements to be processed in a single operation according to the principle known as "Single Instruction, Multiple Data" (SIMD), or specialized instructions such as "Parallel Bits Deposit" (PDEP) instructions.

Preferably, the packed data set comprises a sequence of bits. In such a case, the addition of the interleaved arrays of the intermediate data set to the packed data set in the step g) of the method for encoding of the invention may be interpreted as an addition of interleaved arrays of bits to said sequence of bits, for example by appending or concatenating said arrays to said sequence.

Preferably, buffers are flushed in the step h) of the method for encoding of the invention, i.e. accumulated bits are removed from the buffers, before repeating steps d) to g).

The inventors propose several possible embodiments comprising optional features, where some of them can be combined.

In an embodiment of the invention, the number K of bits comprised in each buffer is greater than or equal to the number Ns of bits of each coefficient. Indeed, it is advantageous for each buffer to be large enough to comprise at least one coefficient, in a case where all Ns bits of a coefficient need to be packed.

Preferably, the number K of bits comprised in each buffer is equal to twice the number Ns of bits of each coefficient, more preferably four times Ns, even more preferably eight times Ns, even more preferably sixteen times Ns. Indeed, it is also advantageous for each buffer to be large enough to accumulate bits from a plurality of coefficients, in order to interleave bits from said coefficients in a single interleaving step, thereby increasing the efficiency of the method for encoding by reducing the number of operations needed to perform said method.

For coefficients coded with Ns = 16 bits, the number K of bits comprised in each buffer may therefore be equal to 16 bits, preferably 32 bits, more preferably 64 bits, even more preferably 128 bits, even more preferably 256 bits.

In an embodiment of the invention, the step d) of the method for encoding is performed in parallel for each coefficient in the group of $N_g$ coefficients. Indeed, bits from different coefficients in a group of coefficients being accumulated in different buffers, the accumulation of said bits may be performed in parallel for each coefficient in the group, thereby increasing the efficiency of the method for encoding by reducing the number of sequential operations needed to perform said method.

Preferably, the step d) of the method for encoding is performed in parallel for a plurality of groups of $N_g$ coefficients, preferably for a plurality of consecutive groups of $N_g$ coefficients, thereby increasing the efficiency of the method for encoding by reducing the number of sequential operations needed to perform said method. In such a case, the step e) of the method for encoding may be interpreted as repeating the step d) with a new plurality of groups of coefficients, preferably a new plurality of consecutive groups of coefficients, and may be expressed as follows: "repeating step d) with a new plurality of groups of $N_g$ coefficients, preferably a new plurality of consecutive groups of $N_g$ coefficients, until at least K bits have been accumulated in each buffer, thereby forming an array of bits in each buffer". Herein, groups of coefficients are considered to be consecutive if they comprise coefficients that are consecutive in the sequence of coefficients of the input data set.

In an embodiment of the invention, the parameter $N_g$ is smaller than or equal to eight. Preferably, the parameter $N_g$ is equal to four.

In an embodiment of the invention, a decorrelative transform is applied on the input data set prior to the accumulation of step d) of the method for encoding. Decorrelative transforms allow the entropy of a set of coefficients to be reduced by concentrating probabilities of occurrence on a subset of coefficient values. Said decorrelative transform may be for example a colour transform, such as a reversible colour transform (RCT), a temporal decorrelative transform based on interframe predictions, a discrete cosine transform (DCT), or a discrete wavelet transform (DWT).

Preferably, said decorrelative transform is a DWT 5/3 transform, as specified in the JPEG XS standard.

More preferably, said sequence of M coefficients corresponds to a sequence of pixels in one or more rows of an image comprising rows and columns of pixels, and said decorrelative transform is performed on said sequence of pixels in one or more rows.

In an embodiment of the invention, a quantization step is performed on the input data set prior to the accumulation of step d) of the method for encoding. A quantization operation reduces the number of bits used for coding the value of a coefficient. In said quantization step, a quantization operation may be performed on all or some of the coefficients comprised in the input data set, so as to reduce the number of bits required to code the values of said coefficients. Said quantization operation may be for example a fixed width quantization, a deadzone quantization, or a uniform quantization, the latter two being specified in the JPEG XS standard.

According to a second aspect of the invention, there is provided a method for decoding a packed data set P' obtainable by the method for encoding of the invention into an output data set V', said method for decoding comprising the steps of:

 a) providing a sequence L' of bitplane counts, the sequence L' comprising a bitplane count for each one of $N_{CG}$ groups of $N_g$ coefficients, $N_g$ being greater than or equal to two;
 b) providing a set of $N_g$ buffers of at least K' bits each, wherein each buffer uniquely corresponds to a position of a coefficient in a group of $N_g$ coefficients;
 c) extracting $N_g$ arrays of K' bits each from the packed data set P' into an intermediate data set;
 d) deinterleaving said $N_g$ arrays of the intermediate data set into said $N_g$ buffers;
 e) repeating the following steps until each buffer contains less bits than the next bitplane count in the sequence L' of bitplane counts:

 i. extracting a number of bits, preferably a number of consecutive bits, from each one of said $N_g$ buffers equal to the next bitplane count in the sequence L' of bitplane counts, thereby forming a group of $N_g$ coefficients;
 ii. adding said group of $N_g$ coefficients to the output data set V';

iii. moving to the next bitplane count in the sequence L' of bitplane counts;

f) repeating steps c) to e) until $N_{CG}$ groups of $N_g$ coefficients have been added to the data set V'.

The method for decoding of the invention allows a packed data set obtainable by the method for encoding of the invention to be decoded into an output data set in a more efficient manner than the one disclosed in the JPEG XS standard.

Indeed, the method for decoding of the invention does not iterate over each bit of each coefficient sequentially. Instead, said method proposes to extract and deinterleave arrays of bits from the packed data set into a set of buffers, thereby forming an array of bits in each buffer, and then to extract bits of coefficients from said arrays for producing the output data set. The extraction of bits for several coefficients is typically performed after a single deinterleaving step, thereby allowing a more efficient extraction of the coefficients from the packed data set than the one disclosed in the JPEG XS standard, i.e. with a reduced number of operations.

The method for encoding and the method for decoding are two aspects of the same invention, forming a single general inventive concept. Indeed, the deinterleaving operation in the step d) of the method for decoding is the opposite of the interleaving operation in the step f) of the method for encoding. In addition, the extraction of bits from the set of buffers in the step e) of the method for decoding is the opposite of the accumulation of bits into the set of buffers in the step d) of the method for encoding. Thus, both the method for encoding and the method for decoding allow coefficients to be packed into or extracted from a packed data set in a more efficient manner than the one disclosed in the JPEG XS standard, i.e. with a reduced number of operations, based on a similar principle.

In the method for decoding of the invention, parameters $N_{CG}$, $N_g$, and K' are positive integers. Besides, in said method, a bitplane count value may take any value comprised between zero and the number of bits coding the value of a coefficient, including these values. Advantageously, said method works in the same way for any such value of a bitplane count. Parameters in the method for decoding may have similar or identical values as the corresponding parameters in the method for encoding. In particular, parameters $N_{CG}$, $N_g$, and K' in the method for decoding may have similar or identical values as parameters $N_{CG}$, $N_g$, and K in the method for encoding, respectively.

The fact that each buffer in the set of buffers provided in the step b) of the method for decoding uniquely corresponds to a position of a coefficient in a group of coefficients is to be interpreted as follows. The number of buffers in said set is equal to the number of coefficients in a group of coefficients, each coefficient having a given position in said group. The unique correspondence between said buffers and said positions means that each buffer corresponds to a position and, reciprocally, that each position corresponds to a buffer.

The extraction of arrays of bits into an intermediate data set in step c) and the deinterleaving of said arrays in step d) of the method for decoding of the invention may be performed in a single operation, i.e. it is not mandatory to actually store in a memory the intermediate data set comprising said arrays.

The step f) of the method for decoding of the invention means that steps c) to e) may be repeated until all bitplane counts of the sequence of bitplane counts have been processed.

Preferably, the steps of the method for decoding of the invention are executed in the indicated order, i.e. the alphabetical order.

Preferably, buffers provided in the step b) of the method for decoding of the invention are adjacent in memory, so as to form a single array or vector of bits, which may facilitate a parallel or vectorized implementation of some of the steps of said method.

Preferably, said buffers are implemented as processor registers. Each one of said buffers may be formed by all or part of one or more processor registers.

Preferably, the packed data set comprises a sequence of bits. In such a case, the extraction of arrays of bits from the packed data set in the step c) of the method for decoding of the invention may be interpreted as an extraction of arrays of bits from said sequence of bits, for example by copying said arrays from said sequence or by removing said arrays from said sequence.

Preferably, the output data set comprises a sequence of coefficients. In such a case, the addition of the group of coefficients to the output data set in the step e) ii. of the method for decoding of the invention may be interpreted as an addition of the coefficients of said group to said sequence of coefficients, for example by appending or concatenating said coefficients to said sequence.

Both the method for encoding and the method for decoding of the invention may be implemented for a big-endian system or a little-endian system. In addition, said methods may be implemented for coefficients in magnitude-only representation or in sign/magnitude representation. In magnitude-only representation, the value of a coefficient represents only a magnitude, i.e. an absolute value without a sign. In sign/magnitude representation, the value of a coefficient represents a signed value, which can therefore be either positive or negative.

According to a third aspect of the invention, there is provided a method for encoding an input data set comprising a sequence of coefficients into a packed data set according to the invention, and for decoding said packed data set into an output data set according to the invention.

According to a fourth aspect of the invention, there is provided a computer program comprising instructions which, when the program is executed by a computer, cause the computer to carry out at least one of the methods of the invention.

According to a fifth aspect of the invention, there is provided an encoder comprising a processor and a memory, and configured to perform the method for encoding of the invention.

According to a sixth aspect of the invention, there is provided a decoder comprising a processor and a memory, and configured to perform the method for decoding of the invention.

According to a seventh aspect of the invention, there is provided a data processing apparatus comprising an encoder according to the invention and a decoder according to the invention.

An encoder according to the fifth aspect of the invention, a decoder according to the sixth aspect of the invention, and a data processing apparatus according to the seventh aspect of the invention may comprise the following means for carrying out the steps of the method for encoding and/or the method for decoding of the invention: a processor able to execute computer instructions, such as for example a CPU or a GPU, said instructions being preferably vectorized instructions according to the SIMD principle or specialized instructions such as PDEP instructions; and at least one memory, such as for example a non-transitory computer-readable memory, a processor register, a random-access memory (RAM), a nonvolatile memory, or other types of memories.

All the possible embodiments and advantages of the first aspect of the invention apply *mutatis mutandis* to other aspects of the invention.

**Brief description of the figures**

For a better understanding of the present invention, reference will now be made, by way of example, to the accompanying drawings in which:

- Fig. 1 schematically represents coefficients in an input data set before encoding by the method for encoding of the invention;
- Fig. 2 schematically represents a set of buffers after an accumulation step of the method for encoding of the invention;
- Fig. 3 schematically represents the set of buffers of Fig. 2 after a further accumulation step of the method for encoding of the invention;
- Fig. 4 schematically represents a packed data set obtained by the method for encoding of the invention, where bits of coefficients are interleaved.

The figures are not drawn to scale. Generally, identical or analogous elements are denoted by the same reference numerals or letters in the figures.

**Detailed description of some embodiments of the invention**

The present invention will be described with respect to particular embodiments and with reference to certain drawings but the invention is not limited thereto. The described functions are not limited by the described structures. The drawings described are only schematic and are non-limiting. In the drawings, the size of some of the elements may be exaggerated and not drawn to scale for illustrative purposes.

Use of the verb "to comprise", as well as the respective variants and conjugations, does not exclude the presence of elements other than those stated. Use of the article "a", "an" or "the" preceding an element does not exclude the presence of a plurality of such elements.

The terms "first", "second", "third" and the like, in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, embodiments referred to as "preferred" are to be construed as exemplary manners in which the invention may be implemented rather than as limiting the scope of the invention.

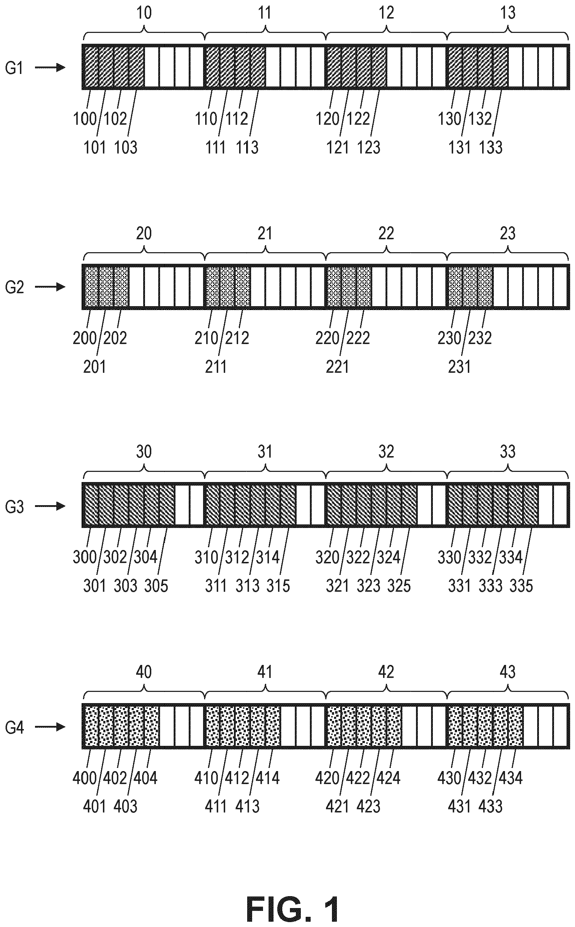

Fig. 1 to Fig. 4 illustrate an application of the method for encoding of the invention. In the figures, coefficients are referred to with two-digit reference signs (10 to 43), and individual bits of coefficients are referred to with three-digit reference signs (100-434) that are consistent throughout the figures, i.e. the same reference sign may be interpreted as referring to the same element, for example the same bit, throughout the figures. In addition, the first two digits of the reference sign of a bit refer to the coefficient that said bits belong to. For example, bits 100, 101, 102, and 103 all belong to coefficient 10. Finally, the last digit in a reference sign of a bit indicates the significance of said bit, a lower digit indicating a higher significance. Therefore, bit 100 is the most significant bit to be packed of coefficient 10, and bit 103 is the least significant bit to be packed of coefficient 10.

In this example application of the method for encoding, each coefficient has a size of Ns = 8 bits, each group (G1 to G4) has a size of $N_g$ = 4 coefficients, and each buffer (B1 to B8) has a size of K = 16 bits. These values have been chosen for the sake of conciseness and legibility of the figures, and should not be construed as limiting the scope of the invention. Other values are possible, for instance coefficients with a size of 16 bits each and buffers with a size of 64 bits each.

Fig. 1 schematically represents coefficients in an input data set before encoding by the method for encoding. The input data set comprises 16 coefficients represented by thick-bordered rectangles. Said coefficients are grouped in 4 groups of 4 coefficients each, with the first digit of the reference sign of a coefficient corresponding to its group number, and the second digit corresponding to its position within its group:

- group G1 comprises coefficients 10, 11, 12, and 13;
- group G2 comprises coefficients 20, 21, 22, and 23;
- group G3 comprises coefficients 30, 31, 32, and 33;
- group G4 comprises coefficients 40, 41, 42, and 43.

Each coefficient comprises 8 bits represented by as many rectangles. A pattern-filled rectangle represents a bit to be packed and is referred to with a three-digit reference sign (100-434). Most significant bits of each coefficient are aligned on the left of the coefficients, for instance bits 100, 110, 120, and 130 for coefficients 10, 11, 12, and 13 in group G1, respectively. Blank rectangles represent bits not to be packed. The bitplane counts for groups G1 to G4 are therefore the following:

- group G1 has a bitplane count equal to 4;
- group G2 has a bitplane count equal to 3;
- group G3 has a bitplane count equal to 6;
- group G4 has a bitplane count equal to 5.

The bitplane counts specify the number of bitplanes to be packed for each group. Thus, a total of 4*(4 + 3 + 6 + 5) = 72 bits are to be packed in the packed data set in this example of application of the method for encoding.

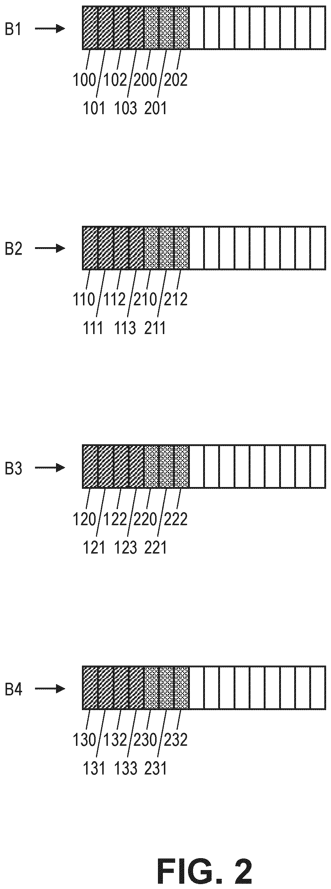

Fig. 2 schematically represents a set of buffers B1, B2, B3, and B4 after an accumulation step of the method for encoding. Each buffer has a size of K = 16 bits. There are as many buffers as the number $N_g$ of coefficients in a group, i.e. 4, each buffer corresponding to a position in a group. Therefore, bits of the following coefficients are to be packed in the following buffers:

- bits of coefficients 10, 20, 30, and 40 in buffer B1;
- bits of coefficients 11, 21, 31, and 41 in buffer B2;
- bits of coefficients 12, 22, 32, and 42 in buffer B3;
- bits of coefficients 13, 23, 33, and 43 in buffer B4.

Fig. 2 represents bits comprised in the buffers after coefficients from groups G1 and G2 have been accumulated in said buffers. A pattern-filled rectangle represents a bit accumulated in a buffer, with patterns and reference signs being consistent with those in Fig. 1. Blank rectangles represent empty buffer spaces. Buffers are filled starting from the left, i.e. by adding each new bit in the left-most empty space successively.

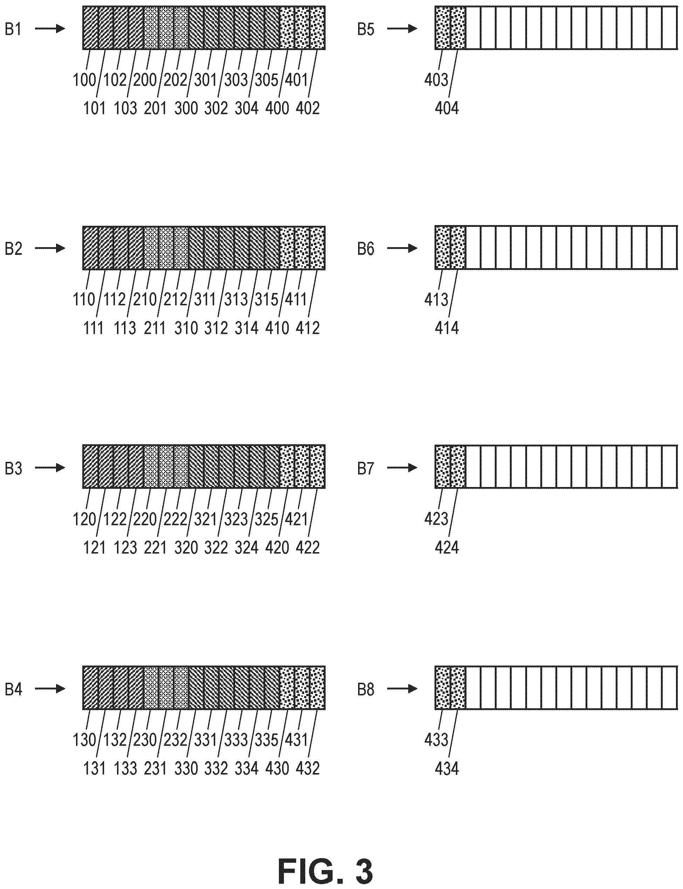

Fig. 3 schematically represents the set of buffers of Fig. 2 after coefficients from groups G3 and G4 have been further accumulated in said buffers. Given that the total number of bits to accumulate in each buffer, i.e 18 bits, exceeds the buffer size of 16 bits, there are two excess bits for each buffer B1 to B4, which cannot fit in said buffers. Said excess bits may be for instance accumulated in a new set of buffers B5 to B8, as represented in Fig. 3. Other ways of dealing with excess bits are possible. Buffers B1 to B4 being full, bits comprised therein may be interleaved in order to produce the output data set.

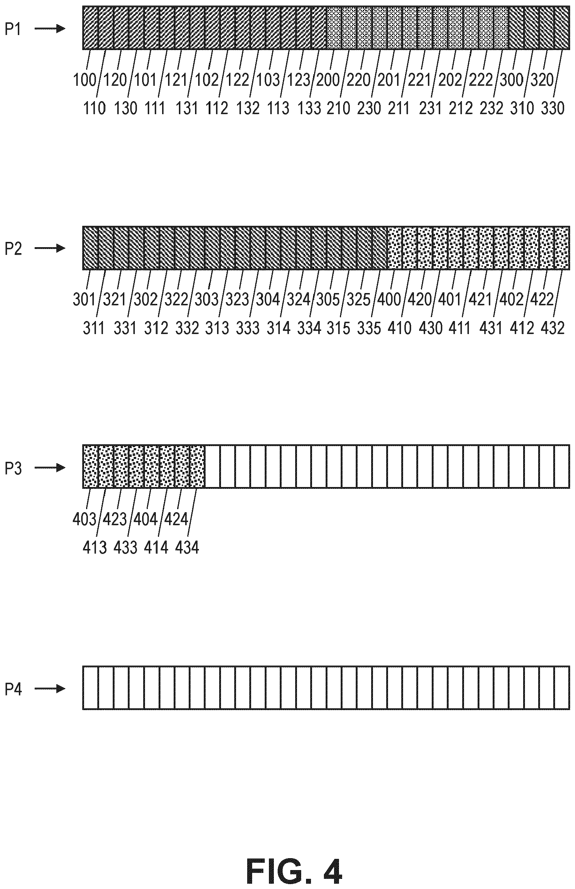

Fig. 4 schematically represents a packed data set obtained by the method for encoding, where bits 100-434 of coefficients 10-43 are interleaved. The packed data set is formed by four arrays P1, P2, P3, and P4. Arrays P1 and P2 comprise interleaved bits from buffers B1 to B4, while arrays P3 and P4 comprise interleaved bits from buffers B5 to B8. The interleaving of bits from a set of buffers is performed as described hereinabove, i.e. by taking one bit from each buffer of the set successively until all bits from all buffers of the set have been taken. A pattern-filled rectangle represents a bit in an array of the packed data set, with patterns and reference signs being consistent with those in Fig. 1, Fig. 2, and Fig. 3. Blank rectangles represent empty spaces in an array of the packed data set. The representation of the packed data set with the four arrays P1, P2, P3, and P4 is arbitrary and should not be construed as limiting the scope of the invention. Other representations of the packed data set are possible, for instance as one large array formed by merging arrays P1, P2, P3, and P4. The packed data set may also be viewed as a stream of bits, in which case the left-most bit 100 of array P1 may be considered as the first bit of the stream, bits being streamed from left to right positions in array P1, then the same in array P2, P3, and P4, successively. In such a case, bit 434 may be considered as the last bit of the stream, the subsequent spaces in arrays P3 and P4 being empty.

Besides, the packed data set represented in Fig. 4, considered as a data subpacket, is compliant with the JPEG XS standard, according to the requirements 1) to 3) set forth hereinabove, as shown hereinafter.

Requirement 1) specifies that the order of the coefficients within a group is preserved in bitplanes packed into the data subpacket. This is indeed the case for the packed data set of Fig. 4, wherein for instance bits 100, 110, 120, and 130 form a bitplane of the most significant bits of coefficients 10, 11, 12, and 13 of group G1, said bits being packed in the packed data set in the same order as the coefficients of the group they belong to.

Requirement 2) specifies that the order of bitplanes is preserved in the data subpacket, i.e. bitplanes of a group of coefficients are packed in the data subpacket by decreasing significance, starting with the most significant bitplane to be packed until the least significant bitplane to be packed. This is indeed the case for the packed data set of Fig. 4, wherein bits of same significance, i.e. same last digit in the reference sign, are packed consecutively, starting with the most significant bit. For instance, bitplanes of the coefficients of group G2 are packed in the following order, wherein bits of same significance and thereby forming a bitplane are grouped with parentheses: (200, 210, 220, 230), (201, 211, 221, 231), (202, 212, 222, 232).

Requirement 3) specifies that the order of the groups of coefficients in the sequence of groups is preserved in the data subpacket. This is indeed the case for the packed data set of Fig. 4, wherein bits 100-133 of coefficients of group G1 are packed before bits 200-232 of coefficients of group G2.

An application of the method for encoding of the invention has been illustrated hereinabove with reference to Fig. 1 to Fig. 4, with Fig. 1 illustrating coefficients in an input data set before the application of the method for encoding, and Fig. 4 illustrating a packed data obtained after the application of the method for encoding.

An application of the method for decoding of the invention may be illustrated in a similar manner, the method for decoding working in an opposite way as the method for encoding. In such a case, Fig. 4 would illustrate a packed data set before the application of the method for decoding, and Fig. 1 would illustrate coefficients in an output data set obtained after the application of the method for decoding.

In summary, the present invention relates to a method for encoding an input data set comprising a sequence of coefficients into a packed data set, said method for encoding comprising a step of grouping the coefficients into groups of coefficients, a step of accumulating a number of bits of said groups into a set of buffers so as to form an array of bits in each buffer, and a step of interleaving said arrays. The present invention also relates to an apparatus and a computer program for encoding an input data set comprising a sequence of coefficients into a packed data set, and to a method, apparatus, and computer program for decoding a packed data set obtainable by the method for encoding into an output data set.

Although the present invention has been described above with respect to particular embodiments, it will readily be appreciated by a person skilled in the art that the present disclosure is not limited by what has been particularly shown and/or described and that alternatives or modified embodiments could be developed in the light of the overall teaching of this disclosure.

## Claims

1. Method for encoding an input data set V comprising a sequence of M coefficients (10-43) of Ns bits into a packed data set P (P1-P4), said method for encoding comprising the steps of:

    a) grouping the M coefficients into $N_{CG}$ groups (G1-G4) of $N_g$ coefficients, $N_g$ being greater than or equal to two;
    b) providing a sequence L of bitplane counts, the sequence L comprising a bitplane count for each one of said groups of coefficients;
    c) providing a set of $N_g$ buffers (B1-B4, B5-B8) of at least K bits each, wherein each buffer uniquely corresponds to a position of a coefficient in a group of $N_g$ coefficients;
    d) for each coefficient in a group of $N_g$ coefficients:

        i. extracting a number of bits (100-434), preferably a number of consecutive bits, of said coefficient equal to the bitplane count corresponding to said group;
        ii. accumulating said number of bits into the buffer corresponding to the position of said coefficient in said group;

    e) repeating step d) with a new group of $N_g$ coefficients until at least K bits have been accumulated in each buffer, thereby forming an array of bits in each buffer;
    f) interleaving said arrays for producing an intermediate data set;
    g) adding said intermediate data set to the packed data set P;
    h) repeating steps d) to g) until all coefficients of the input data set have been processed.

2. Method according to the preceding claim, **characterized in that** the number K of bits comprised in each buffer is greater than or equal to the number Ns of bits of each coefficient.

3. Method according to any of the preceding claims, **characterized in that** the step d) is performed in parallel for each coefficient in the group of $N_g$ coefficients.

4. Method according to the preceding claim, **characterized in that** the step d) is performed in parallel for a plurality of groups of $N_g$ coefficients.

5. Method according to any of the preceding claims, **characterized in that** $N_g$ is smaller than or equal to eight, and preferably equal to four.

6. Method according to any of the preceding claims, **characterized in that** a decorrelative transform is applied on the input data set prior to the accumulation of step d).

7. Method according to the preceding claim, **characterized in that** said decorrelative transform is a DWT 5/3 transform.

8. Method according to any of the two preceding claims, **characterized in that** said sequence of M coefficients corresponds to a sequence of pixels in one or more rows of an image comprising rows and columns of pixels, and **in that** said decorrelative transform is performed on said sequence of pixels in one or more rows.

9. Method according to any of the preceding claims, **characterized in that** a quantization step is performed on the input data set prior to the accumulation of step d).

10. Method for decoding a packed data set P' (P1-P4) obtainable by the method of any of the preceding claims into an output data set V', said method for decoding comprising the steps of:

a) providing a sequence L' of bitplane counts, the sequence L' comprising a bitplane count for each one of $N_{CG}$ groups (G1-G4) of $N_g$ coefficients (10-43), $N_g$ being greater than or equal to two;
b) providing a set of $N_g$ buffers (B1-B4, B5-B8) of at least K' bits each, wherein each buffer uniquely corresponds to a position of a coefficient in a group of $N_g$ coefficients;
c) extracting $N_g$ arrays of K' bits each from the packed data set P' into an intermediate data set;
d) deinterleaving said $N_g$ arrays of the intermediate data set into said $N_g$ buffers;
e) repeating the following steps until each buffer contains less bits than the next bitplane count in the sequence L' of bitplane counts:

i. extracting a number of bits (100-434), preferably a number of consecutive bits, from each one of said $N_g$ buffers equal to the next bitplane count in the sequence L' of bitplane counts, thereby forming a group of $N_g$ coefficients;
ii. adding said group of $N_g$ coefficients to the output data set V';
iii. moving to the next bitplane count in the sequence L' of bitplane counts;

f) repeating steps c) to e) until $N_{CG}$ groups of $N_g$ coefficients have been added to the data set V'.

11. Method for encoding an input data set comprising a sequence of coefficients into a packed data set according to any of claims 1 to 9, and for decoding said packed data set into an output data set according to claim 10.

12. Computer program comprising instructions which, when the program is executed by a computer, cause the computer to carry out the method of any of the preceding claims.

13. An encoder comprising a processor and a memory, and configured to perform the method of any of claims 1 to 9.

14. A decoder comprising a processor and a memory, and configured to perform the method of claim 10.

15. A data processing apparatus comprising an encoder according to claim 13 and a decoder according to claim 14.

FIG. 1

B1 →

100 / 102 / 200 / 202
101 103 201

B2 →

110 / 112 / 210 / 212
111 113 211

B3 →

120 / 122 / 220 / 222
121 123 221

B4 →

130 / 132 / 230 / 232
131 133 231

# FIG. 2

B1 →

100 102 200 202 301 303 305 401
101 103 201 300 302 304 400 402

B5 →

403
404

B2 →

110 112 210 212 311 313 315 411
111 113 211 310 312 314 410 412

B6 →

413
414

B3 →

120 122 220 222 321 323 325 421
121 123 221 320 322 324 420 422

B7 →

423
424

B4 →

130 132 230 232 331 333 335 431
131 133 231 330 332 334 430 432

B8 →

433
434

# FIG. 3

FIG. 4

**EP 4 683 325 A1**

**EUROPEAN SEARCH REPORT**

**Application Number**

EP 24 18 9827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/245384 A1 (FUKUHARA TAKAHIRO [JP] ET AL) 1 October 2009 (2009-10-01) <br> * figure 7 * <br> * figure 31 * <br> * paragraph [0039] - paragraph [0042] * <br> * paragraph [0121] * <br> * paragraph [0126] * <br> * paragraph [0129] - paragraph [0131] * <br> * paragraph [0164] - paragraph [0166] * <br> * paragraph [0265] - paragraph [0273] * <br> * paragraph [0203] * <br> ----- | 1-15 | INV. <br> H04N19/423 <br> H04N19/18 <br> H04N19/184 <br> H04N19/436 |
| A | "Information technology - JPEG XS low-latency lightweight image coding system - Part 1: Core coding system", ISO/IEC 21122-1:2022, IEC, 3, RUE DE VAREMBÉ, PO BOX 131, CH-1211 GENEVA 20, SWITZERLAND , <br> 29 March 2022 (2022-03-29), pages 1-100, XP082034213, <br> Retrieved from the Internet: <br> URL:https://api.iec.ch/harmonized/publications/download/2897619 <br> [retrieved on 2022-03-29] <br> * table A.7 * <br> * sections B.9 and B.10 * <br> * section E.7 * <br> * Annex D * <br> ----- | 1-15 | |
| | | | **TECHNICAL FIELDS SEARCHED (IPC)** <br> H04N |

The present search report has been drawn up for all claims

| Place of search | Date of completion of the search | Examiner |
|---|---|---|
| The Hague | 7 January 2025 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

## ANNEX TO THE EUROPEAN SEARCH REPORT
## ON EUROPEAN PATENT APPLICATION NO.

EP 24 18 9827

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | Publication date | Patent family member(s) | Publication date |
|---|---|---|---|
| US 2009245384 A1 | 01-10-2009 | CN 101540910 A | 23-09-2009 |
| | | JP 5359302 B2 | 04-12-2013 |
| | | JP 2009260931 A | 05-11-2009 |
| | | US 2009245384 A1 | 01-10-2009 |

EPO FORM P0459

For more details about this annex : see Official Journal of the European Patent Office, No. 12/82